Europäisches Patentamt

European Patent Office

Office européen des brevets

(19)

(11) Veröffentlichungsnummer: **0 188 433**
**B1**

(12) # EUROPÄISCHE PATENTSCHRIFT

(45) Veröffentlichungstag der Patentschrift:
**14.06.89**

(51) Int. Cl.⁴: **G 01 P 3/489, F 02 P 7/06**

(21) Anmeldenummer: **85901361.7**

(22) Anmeldetag: **13.03.85**

(86) Internationale Anmeldenummer:
**PCT/DE 85/00080**

(87) Internationale Veröffentlichungsnummer:
**WO 86/00415 (16.01.86** Gazette 86/2)

(54) **VORRICHTUNG ZUR WINKELLAGEERFASSUNG EINES ROTIERENDEN TEILS.**

(30) Priorität: **27.06.84 DE 3423664**

(43) Veröffentlichungstag der Anmeldung:
**30.07.86** Patentblatt 86/31

(45) Bekanntmachung des Hinweises auf die Patenterteilung:
**14.06.89** Patentblatt 89/24

(84) Benannte Vertragsstaaten:
**DE FR GB**

(56) Entgegenhaltungen:
**EP-A- 0 130 762**
**FR-A- 2 539 820**
**GB-A- 2 058 358**
**GB-A- 2 065 310**

**Electronique Applications, December 1982 - January
1983, no. 27, Amsterdam (NL) J.L. Droitcourt:
"Allumage électronique et microprocesseur", pages
11-14, see page 12, lines 14-17; page 12, line 26 - page
13, column 1, line 15; figures 1,3,4
Patents Abstracts of Japan, vol. 8, no. 153, pages 1590
(P-287) & JP-A- 5951361**

(73) Patentinhaber: **ROBERT BOSCH GMBH, Postfach 50,
D-7000 Stuttgart 1 (DE)**

(72) Erfinder: **BÖHMLER, Heinz, Bachgartenstrasse 49,
D-7127 Pleidelsheim (DE)**
Erfinder: **DÄUMER, Rolf, Bleichstrasse 18, D-7252 Weil
der Stadt 2 (DE)**
Erfinder: **MAYER, Dieter, Am Engelberg 22,
D-7988 Wangen/Allgäu (DE)**
Erfinder: **PERENTHALER, Egbert, Thingstrasse 16,
D-7000 Stuttgart 80 (DE)**

ACTORUM AG

# Beschreibung

## Stand der Technik

Die Erfindung geht aus von einer Vorrichtung nach dem ersten Teil des Anspruchs 1. Solche Vorrichtungen dienen insbesondere der Drehzahl- und Winkelinformation für Steuergeräte in Brennkraftmaschinen, insbesondere Zünd- und Kraftstoffeinspritzsteuerungen, und haben den Vorteil, dass beide Parameter mit einem einzigen Geber erfasst werden können. Ähnliche Vorrichtungen sind beispielsweise aus den DE-OS 23 57 061, 29 39 643, 29 47 412, 30 11 822, 30 31 357 sowie der EP-PS 13 846 bekannt. Bei diesen bekannten Vorrichtungen sind verschiedene Möglichkeiten aufgezeigt, eine Bezugsmarke zwischen den gleichmässig über den Umfang verteilten Winkelmarken vorzusehen. Die Winkelmarken sind gewöhnlich als Zähne ausgebildet, wobei die Bezugsmarke als fehlender Zahn, breiter oder schmaler Zahn bzw. Zahnabstand, geschlitzter, abgeschrägter, halbierter, angefräster Zahn, Zahn aus anderem Material oder halber Zahn in Querrichtung ausgebildet sein kann.

Zur Bezugsmarkenerfassung sind aus der DE-OS 29 47 412 sowie der EP-PS 13 846 Taktfrequenz zählende Zähler bekannt, die entweder bei einer bestimmten Flanke eines Zahnes (Vorder- oder Rückflanke) ihre Zählrichtung ändern oder auf einen bestimmten Zahlenwert gesetzt werden. Der Zähler arbeitet somit synchron zu den Winkelmarken und ist daher ausschliesslich für diesen Zweck verwendbar.

Aus der Schrift «Electronique Applications, Dezember 1982 – Januar 1983, Nr. 27, Amsterdam (NL) J.L. Droitcourt: «Allumage électronique et microprocesseur», Seiten 11–14» ist eine Vorrichtung zur Winkellageerfassung eines rotierenden Teils mit sechs gleichmässig über seinen Umfang verteilten Winkelmarken und einer zusätzlichen Bezugsmarke, die von einem Aufnehmer abgetastet werden, bekannt. Dabei werden die zeitlichen Abstände der Markierungen zur Bezugsmarkenerkennung herangezogen. Eine Bezugsmarke wird dann erkannt, wenn das Zeitintervall zwischen dem Auftreten zweier Marken mindestens doppelt so gross ist als das vorhergehende Zeitintervall. Bei einer solchen Anordnung kann ein Störimpuls jedoch zu einem irrtümlichen Erkennen der Bezugsmarke führen

Der vorliegenden Erfindung liegt die Aufgabe zugrunde, die Winkellage eines rotierenden Teils mit einer Bezugsmarke eindeutig zu erfassen und eine irrtümliche Erkennung der Bezugsmarke zu verhindern. Diese Aufgabe wird durch die Merkmale des Anspruchs 1 gelöst.

## Vorteile der Erfindung

Die erfindungsgemässe Vorrichtung mit den kennzeichnenden Merkmalen des Anspruchs 1 hat den Vorteil, dass weder Zählersynchronisationen mit den Winkelmarkenflanken vorgenommen noch irgendwelche Frequenzvervielfachungen oder PLL-ähnliche Verfahren durchgeführt werden müssen. Da der Zähler somit völlig frei und asynchron zu den Winkelmarken zählt, kann er zusätzlich für andere Zwecke verwendet werden. Eine durch Torsionsschwingungen oder durch Drehzahldynamik verursachte irrtümliche Bezugsmarkenerkennung wird durch die erfindungsgemässe Vorrichtung verhindert. Die Information über die momentane Drehzahl des rotierenden Teils liegt jederzeit ohne weitere besondere Massnahme vor.

Weiterhin ist dadurch möglich, eine Verschiebung der Winkelreferenz um ein Inkrement nach früh oder spät mit Hilfe der drei gemessenen Differenzwerte nachträglich zu korrigieren.

Durch die in den abhängigen Ansprüchen aufgeführten Massnahmen sind vorteilhafte Weiterbildungen und Verbesserungen der im Anspruch 1 angegebenen Vorrichtung möglich.

## Zeichnung

Ein Ausführungsbeispiel der Erfindung ist in der Zeichnung dargestellt und in der nachfolgenden Beschreibung näher erläutert.

Es zeigen

Figur 1 das Schaltbild eines Ausführungsbeispiels und

Figur 2 ein Signaldiagramm zur Erläuterung der Wirkungsweise.

## Beschreibung des Ausführungsbeispiels

Ein vorzugsweise mit der Kurbel- oder Nockenwelle einer Brennkraftmaschine verbundenes rotierendes Teil 10 weist umfangsseitig gleichmässig verteilte Winkelmarken 11 auf, die zahnförmig ausgebildet sind. Eine Bezugsmarke 12 ist als fehlender Zahn bzw. grössere Lücke zwischen zwei Zähnen ausgebildet. Natürlich kann die Bezugsmarke 12 auch anders ausgebildet sein, z.B. gemäss einer der Ausführungen des eingangs angegebenen Standes der Technik. Ein induktiver Aufnehmer 13 tastet die Winkelmarken 11 ab, wobei das induzierte Signal in einer z.B. als Komparator ausgebildeten Aufbereitungsschaltung 14 als Rechtecksignal geformt wird.

Neben der induktiven Erfassung der Winkelmarken kann diese alternativ auch nach einem optischen, kapazitiven oder Hochfrequenzverfahren erfolgen. Dabei können prinzipiell die Winkelmarken auch als Schlitze oder Löcher ausgebildet sein.

Der Ausgang der Aufbereitungsschaltung 14 ist mit dem Interrupteingang (INT) eines Mikroprozessors bzw. Mikrorechners 15 verbunden, durch den ausgangsseitig Endstufen 16 zur Steuerung der Zündung und/oder Kraftstoffeinspritzung steuerbar sind. Dazu werden natürlich noch weitere Parameter benötigt, die jedoch zur Vereinfachung nicht näher dargestellt sind. Mit dem Mikrorechner 15 sind ein Zähler 17 sowie ein vorzugsweise als RAM ausgebildeter Arbeitsspeicher 18 über ein Bussystem 19 verbunden. Das System 17 bis 19 ist vorzugsweise ein im Mikrorechner 15 enthaltenes internes System. Die Zähltaktfrequenz für den Zähler 17 wird intern im Mikrorechner 15 erzeugt und dem Takteingang dieses Zählers 17 zugeführt. Diese Zähltaktfrequenz ist konstant und zur Erreichung einer guten Genauigkeit wesentlich höher als die Frequenz der bei höchster vorkommender Drehzahl am Aufnehmer 13 passierenden Winkelmarken 11. Bei einer Zähnezahl von 180 beträgt die maximale Winkelmarkenfrequenz ca. 20 kHz, so dass eine Zähltaktfrequenz von ca. 200 bis 500 kHz als angemessen erscheint.

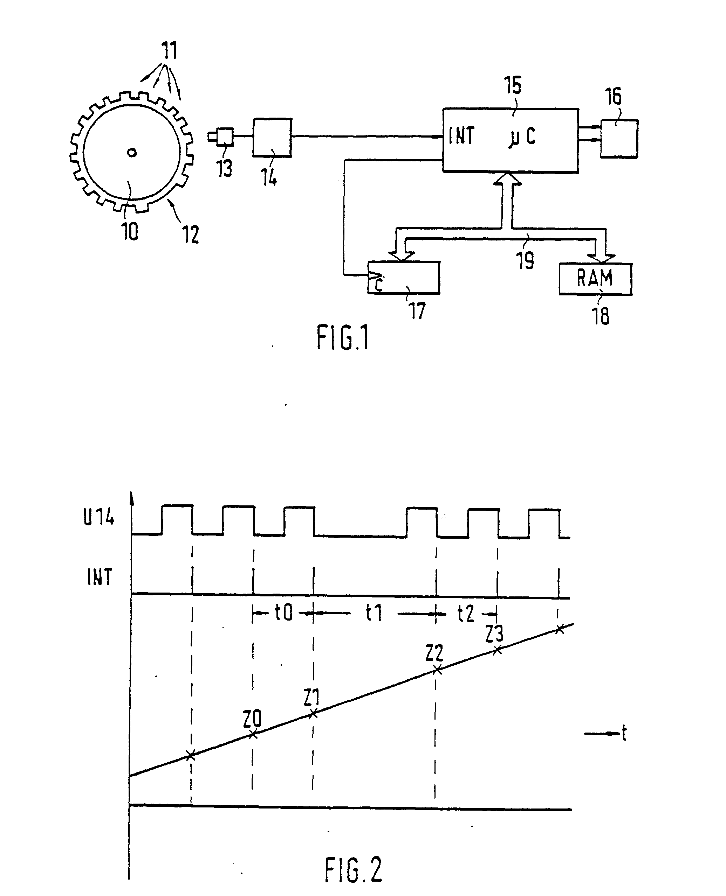

Im folgenden soll die Wirkungsweise anhand des in Figur 2 dargestellten Signaldiagramms erläutert werden. Dort sind die aufbereiteten Winkelmarkensignale als Signalfolge U14 dargestellt. Nach dem dritten, dargestellten Winkelmarkensignal erfolgt aufgrund eines fehlenden oder abgeflachten Zahns eine Signallücke, die als Bezugsmarke ausgewertet werden soll. Mit jeder Rückflanke eines Signals U14 wird aufgrund des dynamischen Interrupteingangs ein Interruptsignal INT erzeugt, das bewirkt, dass der zu diesem Zeitpunkt vorliegende Zählerstand im Zähler 17 in eine Speicherzelle des Speichers 18 übernommen wird. Der Speicher 18 kann dabei vorzugsweise in der Art eines Schieberegisters arbeiten, wobei jeweils gleichzeitig vier Zählerständen entsprechende Speicherwerte vorliegen. Der Zähler 17 zählt fortlaufend die ihm zugeführte Zähltaktfrequenz, wobei keinerlei Zählersynchronisation mit den Winkelmarkenflanken vorliegt, d.h. der Zählvorgang selbst ist völlig unabhängig von der Auswertung der Winkelmarken, bzw. Bezugsmarken. Der Zähler 17 arbeitet dabei in der Art eines Ringzählers.

Zur Erfassung der Bezugsmarke werden die Zeiten zwischen zwei Winkelmarkenflanken bestimmt, wobei die Zeiten ($t0$, $t1$, $t2$) jeweils drei aufeinanderfolgender Perioden miteinander verglichen werden. Die Zeiten bzw. den Zeiten proportionale Zahlenwerte ergeben sich durch Differenzbildung der bei den entsprechenden Rückflanken eingespeicherten Zahlenwerte. So ergeben sich für drei aufeinanderfolgende Perioden

$$t0 = Z1 - Z0$$
$$t1 = Z2 - Z1$$
$$t2 = Z3 - Z2.$$

Im Normalfall sind die ermittelten Zeiten – in Abhängigkeit der jeweils vorliegenden Beschleunigungsverhältnisse – im wesentlichen gleich. Tritt dagegen gemäss Figur 2 eine Bezugsmarkenlücke auf, so wird die entsprechende Zeit $t1$ wesentlich länger als die vorliegende und nachfolgende Zeit $t0$ bzw. $t2$. Eine Bezugsmarke wird dann erkannt, wenn die mittlere Zeit $t1$ um ein vorgebbares Mass von der Zeit davor und der Zeit danach abweicht. Die Bedingung für die Erkennung der Bezugsmarke lautet demnach vorzugsweise:

$$t1 \cdot n > t0 \text{ und } t1 \cdot n > t2.$$

Im dargestellten Fall wird z.B. $n = 2/3$ gewählt. Dieses einfache mathematische Vergleich wird im Mikrorechner 15 durchgeführt, der dann nach der Erfassung und Auswertung des Zählerstandes $Z3$ die Winkelmarkeninformation an die Endstufen 16 abgibt. Der Faktor $n$ muss dabei so gewählt werden, dass Fehler infolge von Torsionsschwingungen oder Drehzahldynamik vermieden werden.

Die Information über das nächste Auftreten der Bezugsmarke kann im Mikrorechner 15 anhand der Zähnezahl des Zahnkranzes festgestellt werden. Wird die entsprechende Zeit $t1$ der darauffolgenden Periode jedoch nicht als Bezugsmarkenlücke erkannt, so kann geprüft werden, ob eine der beiden benachbarten Perioden $t0$ bzw. $t2$ eine Bedingung für die Erkennung der Bezugsmarke erfüllt. Ist dies der Fall, so kann durch Korrektur der Winkelreferenz der Verlust einer Winkelmarkenflanke bzw. das zusätzliche Auftreten einer solchen Flanke, z.B. durch Störungen, kompensiert werden. Die Winkelmarke kann dadurch redundant erfasst werden.

Wird anstelle einer fehlenden Winkelmarke bzw. verbreiterten Lücke zwischen zwei Winkelmarken eine geschlitzte Winkelmarke oder ein verringerter Abstand verwendet, so muss für den Faktor $n$ entsprechend ein Zahlenwert grösser als 1 gewählt und die Bedingung «>» durch die Bedingung «<» ersetzt werden.

Die ermittelten Zeiten bzw. zeitproportionalen Zahlenwerte $t0$, $t2$ können gleichzeitig als Drehzahlinformation verwendet werden, da sie direkt umgekehrt zur Drehzahl sind. Auf diese Weise können mit einem einzigen Zähler 17 und einem Speicher 18 sowohl die Bezugsmarke wie auch die Drehzahl erfasst werden, wobei der Zähler 17 sowie die überwiegende Zahl der Speicherplätze des Speichers 18 noch für weitere Zwecke verwendbar sein.

## Patentansprüche

1. Vorrichtung zur Winkellageerfassung eines rotierenden Teils, das gleichmässig über seinem Umfang verteilt Winkelmarken (11) aufweist, wobei als Bezugsmarke (12) wenigstens eine Winkelmarke und/oder ein Zwischenraum zwischen zwei Winkelmarken im Vergleich zu den anderen Winkelmarken bzw. Zwischenräumen abweichend geformt ist, mit einem Aufnehmer (13), der die Winkelmarken abtastet und einer Aufbereitungsschaltung (14) zur Erzeugung eines Rechtecksignals, wobei der Abstand zwischen gleichartigen Winkelmarkenflanken durch einen eine Taktfrequenz zählenden Zähler (17) erfasst wird und durch jeweils eine vorbestimmte Winkelmarkenflanke der augenblicklich vorliegende Zählerstand in einen Speicher (18) übertragen wird, dadurch gekennzeichnet, dass der Zähler (17) ein freilaufender, kontinuierlich zählender Zähler ist und dass wenigstens vier aufeinanderfolgende Speicherwerte zur Ermittlung von drei Differenzwerten verwendet werden, wobei eine Bezugsmarke dann erkannt wird, wenn der mittlere Differenzwert von den beiden anderen um ein vorgebbares Mass abweicht.

2. Vorrichtung nach Anspruch 1, dadurch gekennzeichnet, dass der Zähler (17) sowie der Speicher (18) mit einem Mikrorechner (15) verbunden oder in diesem enthalten ist und dass ein mit dem Interrupt-Eingang (INT) des Mikrorechners (15) verbundener Winkelmarkengeber (10, 13) vorgesehen ist, wobei jedes Interrupt-Signal eine Übertragung des Zählerstandes in den Speicher (18) bewirkt.

3. Vorrichtung nach Anspruch 2, dadurch gekennzeichnet, dass der Zähltakt für den Zähler (17) durch den Mikrorechner (15) erzeugt wird.

4. Vorrichtung nach einem der vorhergehenden Ansprüche, dadurch gekennzeichnet, dass die Differenzwerte als Drehzahlinformation verwendet werden.

**Revendications**

1. Dispositif pour détecter la position angulaire d'un organe rotatif, qui présente des marques angulaires (11) réparties régulièrement sur sa périphérie, pour lequel, en tant que marque repère (12), au moins une marque angulaire et/ou un espace intermédiaire entre deux marques angulaires en comparaison à d'autres marques angulaires ou d'autres espaces intermédiaires est formé de façon différente, avec un capteur (13) qui détecte marques angulaires, et un circuit électrique (14) de traitement pour la production d'un signal rectangulaire, pour lequel la distance entre les flancs des marques angulaires de même type est saisie par un compteur (17) comptant une fréquence d'impulsions, et l'état existant instantané du compteur est transmis à une mémoire (18) chaque fois par un flanc prédéterminé de marque angulaire, caractérisé en ce que le compteur (17) est un compteur continu, comptant de façon continue, et qu'au moins quatre valeurs se suivant l'une après l'autre et mises en mémoire sont utilisées pour l'obtention de trois différences, grâce à quoi la marque repère est ensuite reconnue, si la valeur de la différence médiane s'écarte des deux autres différences d'une quantité prédéterminée.

2. Dispositif selon la revendication 1, caractérisé en ce que le compteur (17) ainsi que la mémoire (18) sont raccordés à un micro-ordinateur (15), ou bien sont contenus dans celui-ci, et en ce qu'un émetteur (10, 13) de marques angulaires connecté à l'entrée de commutation (INT) du micro-ordinateur (15) est prévu, grâce à quoi chaque signal de commutation effectue une transmission de l'état du compteur dans la mémoire (18).

3. Dispositif selon la revendication 2, caractérisé en ce que l'impulsion de comptage pour le compteur (17) est produite par le micro-ordinateur (15).

4. Dispositif selon l'une quelconque des revendications précédentes, caractérisé en ce que les valeurs des différences peuvent être utilisées comme information concernant la vitesse de rotation.

**Claims**

1. Device for detecting the angular positon of a rotary member having angle marks (11) distributed uniformly over its periphery, at least one angle mark and/or one interval between two angle marks being distinct in comparison to the other angle marks or intervals to form reference mark (12), said device having a pickup (13) which scans the angle marks and a conditioning circuit (14) for generating a square-wave signal, the distance between similar angle mark edges being determined by a counter (17) counting the pulse frequency, and the instant state of the counter being transmitted to a memory (18) for each respective predetermined angle mark edge, characterized in that the counter (17) is a free-running, continuously counting counter and in that at least four consecutive stored values are used to calculate three difference values a reference mark being recognized when the middle difference value deviates from the two others by given amount.

2. Device according to Claim 1, characterized in that the counter (17) as well as the memory (18) are connected to a microprocessor (15) or are contained therein, and in that an angle mark sensor (10, 13) connected to the interrupt input (INT) of the microprocessor (15) is provided, each interrupt signal causing the counter state to be transmitted to the memory (18).

3. Device according to Claim 2, characterized in that the counting pulse for the counter (17) is generated by the microprocessor (15).

4. Device according to one of the preceding claims, characterized in that the difference values are used as speed information.

FIG.1

FIG.2